# EUROPÄISCHE PATENTANMELDUNG

(11) **EP 4 793 530 A1**
(43) Veröffentlichungstag der Anmeldung: **19.08.2026**
(21) Anmeldenummer: 25157928.0
(22) Anmeldetag: 14.02.2025
(51) Int. Cl.: F16L 5/04

(54) **VORRICHTUNG UND VERFAHREN ZUR HERSTELLUNG EINER RAUCHGASDICHTEN ROHRDURCHFÜHRUNG**

(71) Anmelder: Hilti Aktiengesellschaft, 9494 Schaan (LI)
(72) Erfinder: Förg, Christian, 86807 Buchloe (DE); Mordau, Ulf, 86807 Buchloe (DE); Pulido Jimenez, Jose Fernando, 86899 Landsberg am Lech (DE)
(74) Vertreter: Hilti Aktiengesellschaft Corporate Intellectual Property

(57) **Zusammenfassung**

Die Erfindung betrifft eine Vorrichtung (1) zur Herstellung einer rauchgasdichten Rohrdurchführung in einer Gebäudewand oder -decke (2, 3), umfassend
- ein mehrteiliges Kragenelement (4) mit einem ersten Kragenteil (4.1) und einem zweiten Kragenteil (4.2), die um ein Rohr (5) legbar und über integrierte Verschlusselemente (6, 7) verbindbar sind, sowie
- eine Brandschutzmanschette (8), die nach dem Verbinden der beiden Kragenteile (4.1, 4.2) in das Kragenelement (4) einsetzbar, insbesondere einsteckbar, ist.

Die Erfindung betrifft ferner ein Verfahren zur Herstellung einer rauchgasdichten Rohrdurchführung unter Verwendung einer erfindungsgemäßen Vorrichtung (1).

## Beschreibung

Die Erfindung betrifft eine Vorrichtung und ein Verfahren zur Herstellung einer rauchgasdichten und brandabschottenden Rohrdurchführung in einer Gebäudewand oder -decke.

### Stand der Technik

Zur Herstellung einer rauchgasdichten und brandabschottenden Rohrdurchführung sind aus dem Stand der Technik Brandschutzmanschetten oder Brandschutzeingießelemente mit einem intumeszierenden Material bekannt, das unter Hitzeeinwirkung aufquillt. Die Brandschutzmanschette oder ein Brandschutzeingießelement schützt in erster Linie vor dem Brandüberschlag in einen benachbarten Brandabschnitt.

Die hier interessierenden Brandschutzeingießelemente oder Brandschutzmanschetten werden in der Regel erst nach der Rohrmontage installiert indem diese in eine Wand- oder Deckenöffnung eingesetzt und gegebenenfalls auch eingemörtelt werden. Dies birgt die Gefahr, dass beim Einmörteln der Brandschutzmanschette Mörtel in die Brandschutzmanschette gelangt, so dass der Mörtel die Funktion der Brandschutzmanschette beeinträchtigt. Um dem entgegenzuwirken, kann die Brandschutzmanschette zusammen mit einem Platzhalter für das Rohr eingemörtelt werden. Nach dem Einmörteln wird der Platzhalter entfernt und an dessen Stelle das Rohr eingesetzt. Alternativ kann eine Brandschutzmanschette mit Deckel verwendet werden, der nach dem Einmörteln entfernt wird.

Das nachträgliche Einsetzen des Rohrs in die Brandschutzmanschette erfordert einen Spalt von wenigen Millimetern zwischen der Brandschutzmanschette und dem Rohr. Dieser Spalt muss geschlossen werden, um sicherzustellen, dass die Rohrdurchführung rauchgasdicht ist. Das Brandschutzeingießelement weist daher innenumfangseitig in der Regel eine umlaufende Dichtung auf, die nach dem Einsetzen des Rohrs in die Brandschutzmanschette unter einer radialen Vorspannung außenumfangseitig am Rohr anliegt.

Konzepte, bei denen erst die Brandschutzmanschette eingemörtelt und anschließend das zu schützende Rohr eingesetzt wird, erfordern eine exakte Positionierung der Brandschutzmanschette beim Einmörteln. Denn nach dem Aushärten des Mörtels ist eine Korrektur der Position nicht mehr möglich. Dies kann unter Baustellenbedingungen eine Herausforderung darstellen.

Die vorliegende Erfindung ist mit der Aufgabe befasst, die Herstellung einer rauchgasdichten Rohrdurchführung unter Baustellenbedingungen zu vereinfachen, so dass eine hohe Verarbeitungssicherheit bei der Herstellung einer rauchgasdichten Rohrdurchführung gegeben ist.

Zur Lösung der Aufgabe werden die Vorrichtung mit den Merkmalen des Anspruchs 1 sowie das Verfahren mit den Merkmalen des Anspruchs 11 vorgeschlagen. Vorteilhafte Weiterbildungen der Erfindung sind den jeweiligen Unteransprüchen zu entnehmen.

### Offenbarung der Erfindung

Die zur Herstellung einer rauchgasdichten Rohrdurchführung in einer Gebäudewand oder -decke vorgeschlagene Vorrichtung umfasst:
- ein mehrteiliges Kragenelement mit einem ersten Kragenteil und einem zweiten Kragenteil, die um ein Rohr legbar und über integrierte Verschlusselemente verbindbar sind, sowie
- eine Brandschutzmanschette, die nach dem Verbinden der beiden Kragenteile in das Kragenelement einsetzbar, insbesondere einsteckbar, ist.

Bei der vorgeschlagenen Vorrichtung wird erst das Kragenelement an das Rohr angelegt, dann die Brandschutzmanschette montiert, wobei das Anlegen des Kragenelements bei bereits installiertem Rohr erfolgen kann. Die Position der Brandschutzmanschette wird demnach durch die Position des Rohrs vorgegeben und nicht umgekehrt. Damit entfällt die Notwendigkeit einer exakten Positionierung der Brandschutzmanschette vor dem Einmörteln.

Des Weiteren wird die Montage der Brandschutzmanschette durch das Kragenelement vereinfacht, das zwischen dem Rohr und der Brandschutzmanschette vermittelt. Nicht die Brandschutzmanschette, sondern das Kragenelement wird an das Rohr angelegt, so dass vorliegend das Kragenelement die Funktion eines rauchgasdichten Abschlusses übernimmt. Die Brandschutzmanschette hat nur noch die Aufgabe, im Brandfall das wegbrennende Kunststoffrohr durch Bildung einer Absperrschicht gegen eindringendes Feuer, Hitze und Rauch abzudichten. Das Kragenelement selbst wird im Laufe der Brandbeanspruchung oft hohen Temperaturen ausgesetzt, so dass die abdichtende Funktion im Laufe der Zeit nachlässt. Hierzu weist die Brandschutzmanschette gemäß den eingangs genannten Brandschutzmanschetten ein intumeszierenden Material auf, das unter Hitzeeinwirkung aufquillt und sich schützend um das Rohr und vor das wegbrennende Rohr legt. Da das Kragenelement rauchgasdicht am Rohr anliegt, kann die Brandschutzmanschette auf Abstand zum Rohr montiert werden, so dass ein luftgefüllter Ringspalt zwischen dem Rohr und der Brandschutzmanschette verbleibt. Über diesen luftgefüllten Ringspalt können im Brandfall die heißen Brandgase leicht an das intumeszierende Material gelangen und die Brandschutzmanschette aktivieren.

Dadurch, dass bei der vorgeschlagenen Vorrichtung das an das Rohr anzulegende Kragenelement mehrteilig, insbesondere zweiteilig, ausgeführt ist, kann auch das Kragenteil besonders einfach montiert werden. Nach dem Anlegen können die beiden Kragenteile über die integrierten Verschlusselemente verbunden werden, so dass der Anschluss des Kragenteils am Rohr rauchgasdicht ist. Anschließend kann die Brandschutzmanschette in das Kragenteil eingesetzt bzw. eingesteckt werden, wobei das Einstecken besonders einfach zu realisieren ist. Eine finale Fixierung der Vorrichtung innerhalb einer Wand- oder Deckenöffnung kann durch Einmörteln erreicht werden.

Durch die über das zusätzliche Kragenelement bewirkte Funktionstrennung wird die Montage der vorgeschlagenen Vorrichtung deutlich vereinfacht. In der Folge steigt die Verarbeitungssicherheit auf der Baustelle, so dass die vorgeschlagene Vorrichtung besonders baustellentauglich ist.

Gemäß einer bevorzugten Ausführungsform der Erfindung bilden die beiden Kragenteile des Kragenelements jeweils eine Halbschale aus. Bei der Montage der Vorrichtung werden die beiden Halbschalen seitlich an das Rohr angelegt und über die integrierten Verschlusselemente verbunden. Die Verschlusselemente können insbesondere als Schnappverschluss zusammenwirken, der ein schnelles und bei Bedarf wieder lösbares Verbinden der beiden Kragenteile ermöglicht. Ein einzelnes Verschlusselement kann als Haken, Riegel, Zunge, Stecklasche, Öse und/oder als pilzkopfartiger Vorsprung ausgebildet sein.

Alternativ oder ergänzend wird vorgeschlagen, dass die beiden Kragenteile über ein Gelenk oder Scharnier, vorzugsweise ein Filmscharnier, verbunden sind. Die Verbindung der beiden Kragenteile stellt sicher, dass kein Kragenteil auf der Baustelle verloren gehen kann. Über das Gelenk bzw. Scharnier bleibt weiterhin eine Bewegung der beiden Kragenteile, vorzugsweise Halbschalen, zueinander möglich, so dass das Kragenelement einfach montiert werden kann.

Bevorzugt bildet das Kragenelement im verbundenen Zustand der beiden Kragenteile einen sich nach radial innen erstreckenden, umlaufenden Bundabschnitt aus. Über den umlaufenden Bundabschnitt kann das Kragenelement an das Rohr angelegt werden, so dass die geforderte Rauchgasdichtheit erzielt wird. Im Übrigen kann das Kragenelement einen radialen Abstand zum Rohr einhalten, so dass das Kragenelement im Wesentlichen topfförmig ausgeführt ist. Die topfförmige Ausführung erleichtert das Einsetzen bzw. Einstecken der Brandschutzmanschette. Ferner bevorzugt ist an dem umlaufenden Bundabschnitt ein umlaufender Dichtabschnitt, beispielsweise in Form einer Dichtlippe, zur dichtenden Anlage am Rohr angeordnet. Über den Dichtabschnitt kann eine noch bessere Abdichtung bewirkt werden. Dies gilt insbesondere bei Verwendung eines Elastomermaterials zur Ausbildung des Dichtabschnitts, da dieses beim Anlegen der beiden Kragenteile zusammengedrückt werden kann, so dass es unter einer radialen Vorspannung am Rohr anliegt. Auf diese Weise wird zugleich eine Schallentkopplung erreicht.

Des Weiteren bevorzugt weist der sich nach radial innen erstreckende, umlaufende Bundabschnitt mindestens eine Öffnung zur Aufnahme einer Stecklasche der Brandschutzmanschette auf. Die mindestens eine Öffnung ermöglicht eine Steckverbindung zwischen dem Kragenelement und der Brandschutzmanschette. Vorzugsweise sind mehrere Öffnungen in gleichem Winkelabstand zueinander im Bundabschnitt vorgesehen, so dass in jede Öffnung eine Stecklasche der Brandschutzmanschette aufgenommen werden kann. Die Brandschutzmanschette weist hierzu bevorzugt eine entsprechende Anzahl an Stecklaschen auf. Die mindestens eine Öffnung zur Aufnahme einer Stecklasche der Brandschutzmanschette kann eine größere Querschnittsfläche als die Stecklasche selbst aufweisen, so dass hierüber beim Einstecken der Stecklasche in die Öffnung Fertigungs- und/oder Montagetoleranzen ausgleichbar sind. In Weiterbildung der Erfindung wird vorgeschlagen, dass die mindestens eine Öffnung durch eine mittels der Stecklasche durchstoßbare Membran verschlossen ist. Beim Einsetzen bzw. Einstecken der Brandschutzmanschette in das Kragenelement kann mit Hilfe der mindestens einen Stecklasche die Membran durchstoßen werden, so dass weiterhin eine einfache Montage der Brandschutzmanschette gewährleistet ist. Zugleich gewährleistet die Membran eine rauchgasdichte Rohrdurchführung, da sich die Membran beim Durchstoßen dichtend an die Stecklasche anlegt. Die Membran verhindert jedoch in erster Linie das Eindringen von Mörtel oder Beton in das Kragenelement.

Als weiterbildende Maßnahme wird vorgeschlagen, dass das Kragenelement im verbundenen Zustand der beiden Kragenteile ein Verlängerungsrohr ausbildet, das am sich nach radial innen erstreckenden, umlaufenden Bundabschnitt des Kragenelements angeordnet ist. Über das Verlängerungsrohr kann die Abmessung der Vorrichtung in axialer Richtung an eine vorgegebene Wand- oder Deckendicke angepasst werden. Die Abmessung in axialer Richtung kann zudem so gewählt werden, dass das Verlängerungsrohr über die Oberfläche der Gebäudewand oder -decke leicht vorsteht. Diese Ausführung erleichtert das Einmörteln der Vorrichtung, insbesondere des Kragenelements der Vorrichtung.

Des Weiteren wird vorgeschlagen, dass auf dem sich nach radial innen erstreckenden, umlaufenden Bundabschnitt des Kragenelements Abstandshalter zur axialen Abstützung der in das Kragenelement eingesetzten, insbesondere eingesteckten, Brandschutzmanschette angeordnet sind. Im Brandfall kann so die heißen Brandgase nicht nur zwischen die Brandschutzmanschette und das Rohr, sondern auch zwischen die Brandschutzmanschette und das Kragenelement gelangen, um die Aktivierung der Brandschutzmanschette zu fördern.

Ferner wird vorgeschlagen, dass bei eingesetzter, insbesondere eingesteckter, Brandschutzmanschette ein umlaufender Radialspalt zwischen dem Kragenelement und der Brandschutzmanschette ausgebildet wird. Die heißen Brandgase können somit an zumindest drei Seiten der Brandschutzmanschette gelangen. Sofern die Brandschutzmanschette über Abstandshalter am Kragenelement axial abgestützt ist, wird die Brandschutzmanschette im Brandfall allseitig von den heißen Brandgase umströmt. Dadurch ist ein schnelles Aktivieren der Brandschutzmanschette im Brandfall gewährleistet. Der umlaufende Radialspalt zwischen dem Kragenelement und der Brandschutzmanschette kann alternativ mit einem Isoliermaterial gefüllt werden, um eine Schallentkopplung zwischen dem Kragenelement und der Brandschutzmanschette zu bewirken. Isoliermaterial dient jedoch in erster Linie dazu, im Brandfall möglichst viel Temperatur im Kragenelement zu halten; die Isolierung verhindert ein Abfließen der Wärme in das Kragenelement und die große Masse des sich dahinter befindlichen Betons / Mörtels.

Vorteilhafterweise bildet das Kragenelement im verbundenen Zustand der beiden Kragenteile einen sich nach radial außen erstreckenden, umlaufenden Bundabschnitt zur Abstützung an einer Oberfläche der Gebäudewand oder -decke aus. Der Bundabschnitt erleichtert die Positionierung des Kragenelements bei der Montage der Vorrichtung, da er die Einbautiefe des Kragenelements vorgibt. Zugleich kann der Bundabschnitt als Schalungshilfe beim Einmörteln der Vorrichtung eingesetzt werden, so dass die Montage weiter vereinfacht wird.

Bevorzugt weist der sich nach radial außen erstreckende, umlaufende Bundabschnitt mindestens eine Bohrung zur Aufnahme eines Befestigungsmittels, beispielsweise einer Schraube, auf. Mit Hilfe des Befestigungsmittels kann das Kragenelement temporär oder dauerhaft an der Oberfläche der Gebäudewand oder -decke fixiert werden. Die zumindest temporäre Fixierung, beispielsweise durch Anschrauben, erweist sich insbesondere beim Einmörteln des Kragenelements von Vorteil.

Ferner bevorzugt sind die Verschlusselemente der beiden Kragenteile des Kragenelements in einen verriegelnden Eingriff miteinander bringbar. Auf diese Weise kann die Lage der beiden Kragenelemente zueinander fixiert werden, was sich ebenfalls beim Einmörteln des Kragenelements als besonders vorteilhaft erweist. Wie bereits erwähnt kann ein einzelnes Verschlusselement als Haken, Riegel, Zunge, Stecklasche, Öse und/oder als pilzkopfartiger Vorsprung ausgebildet sein.

Zur Lösung der eingangs genannten Aufgabe wird darüber hinaus ein Verfahren zur Herstellung einer rauchgasdichten Rohrdurchführung in einer Gebäudewand oder
- decke unter Verwendung einer erfindungsgemäßen Vorrichtung vorgeschlagen. Das Verfahren umfasst die Schritte:
   a) Einsetzen des Rohrs in eine Wand- oder Deckenöffnung,
   b) Anlegen der beiden Kragenteile des Kragenelements an das Rohr und Verbinden der beiden Kragenteile,
   c) Einsetzen, insbesondere Einstecken, der Brandschutzmanschette in das Kragenelement und
   d) Einmörteln des Kragenelements in der Wand- oder Deckenöffnung.

Die Schritte a) b) c) und d) können in genau dieser Reihenfolge durchgeführt werden. Alternativ ist es beispielsweise auch möglich, die Schritte b) und c) bei dem Verfahren zu vertauschen.

Bei einer weiteren alternativen Ausführungsform eines Verfahrens nach der Erfindung kann es vorgesehen sein, dass die Bearbeitungsschritte b), c) und d) vor dem

Bearbeitungsschritt a) durchgeführt werden. Dies ist insbesondere vorteilhaft, wenn ein Verlängerungsrohr bzw. Verlängerungsabschnitt vorgesehen ist.

Bevorzugt werden bei der Ausführung von Schritt b) an der Brandschutzmanschette angeordnete Stecklaschen in Öffnungen des Kragenelements eingesteckt. Die Verbindung zwischen der Brandschutzmanschette und dem Kragenelement ist in diesem Fall eine Steckverbindung. Eine Steckverbindung ist besonders einfach herzustellen. Zudem erleichtert sie die Positionierung der Brandschutzmanschette, da die Position über die Öffnungen des Kragenelements vorgegeben ist. Sofern die Querschnittsflächen der Öffnungen größer als die der Stecklaschen sind, können hierüber Fertigungs- und/oder Montagetoleranzen ausgeglichen werden. Um auch in diesem Fall die geforderte Rauchgasdichtheit zu gewährleisten, können die Öffnungen jeweils mittels einer Membran verschlossen sein. Diese werden beim Einsetzen der Brandschutzmanschette in Schritt b) mittels der Stecklaschen durchstoßen, wobei sich die Membranen zumindest mörteldicht an die Stecklaschen anlegen.

Des Weiteren wird vorgeschlagen, dass die Stecklaschen nach dem Einstecken in die Öffnungen des Kragenelements verbogen werden. Auf diese Weise kann eine Lagefixierung der Brandschutzmanschette erzielt werden. Das Verbiegen kann insbesondere ein Umbiegen der Stecklaschen unmittelbar hinter dem die Öffnungen aufweisenden Bundabschnitt des Kragenelements beinhalten. Das Verbiegen bzw. Umbiegen bewirkt einen Formschluss, der verhindert, dass die in das Kragenelement eingesetzte bzw. eingesteckte Brandschutzmanschette herausfällt.

Ferner wird vorgeschlagen, dass bei Ausführung von Schritt d) das Kragenelement als Schalungshilfe verwendet wird. In diesem Fall kann auf ein weiteres Schalungselement beim Einmörteln des Kragenelements verzichtet werden. Das Kragenelement weist hierzu bevorzugt einen sich nach radial außen erstreckenden, umlaufenden Bundabschnitt auf, über den sich das Kragenelement nach dem Einsetzen in die Wand- oder Deckenöffnung an der Oberfläche der Gebäudewand oder -decke axial abstützen kann. Bei sehr großen Wand- oder Deckenöffnungen kann der Bundabschnitt des Kragenelements auch dahingehend hilfreich sein, dass die erforderliche Schalung nicht mehr exakt um an das Rohr angepasst werden muss, was wiederum die Installation erleichtert.

Bevorzugte Ausführungsformen der Erfindung werden nachfolgend anhand der beigefügten Zeichnungen näher beschrieben. Diese zeigen:
- Fig. 1: einen Längsschnitt durch eine erste erfindungsgemäße Vorrichtung, eingesetzt und eingemörtelt in eine Deckenöffnung,
- Fig. 2: eine Untersicht auf die Vorrichtung der Fig. 1,
- Fig. 3: einen Längsschnitt durch eine zweite erfindungsgemäße Vorrichtung, eingesetzt und eingemörtelt in eine Deckenöffnung,
- Fig. 4: eine Untersicht auf die Vorrichtung der Fig. 3,
- Fig. 5: eine perspektivische Darstellung eines Kragenteils eines Kragenelements einer vierten erfindungsgemäßen Vorrichtung,
- Fig. 6: einen Längsschnitt durch eine fünfte erfindungsgemäße Vorrichtung, eingesetzt und eingemörtelt in eine Deckenöffnung,
- Fig. 7: einen Längsschnitt durch eine sechste erfindungsgemäße Vorrichtung, eingesetzt und eingemörtelt in eine Deckenöffnung, und
- Fig. 8: einen Längsschnitt durch eine siebte erfindungsgemäße Vorrichtung, eingesetzt und eingemörtelt in eine Wandöffnung.

### Ausführliche Beschreibung der Zeichnungen

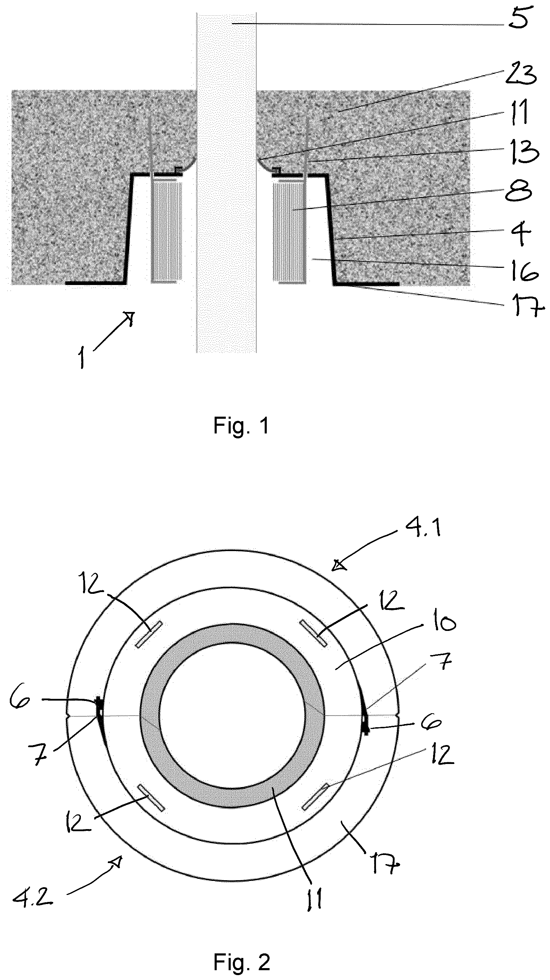

Den Figuren 1 und 2 ist eine erste bevorzugte Ausführungsform einer erfindungsgemäßen Vorrichtung 1 zur Herstellung einer rauchgasdichten Rohrdurchführung in einer Gebäudewand oder -decke 2, 3 zu entnehmen. Die dargestellte Vorrichtung 1 umfasst ein mehrteiliges Kragenelement 4 sowie eine Brandschutzmanschette 8. Bei der Brandschutzmanschette 8 kann es sich um eine herkömmliche Brandschutzmanschette mit einem intumeszierenden Material handeln, das unter Hitzeeinwirkung aufquillt. Das mehrteilige Kragenelement 4 weist vorliegend zwei als Halbschalen ausgeführte Kragenteile 4.1, 4.2 auf, die über integrierte Verschlusselemente 6, 7 verbindbar sind (siehe Figur 2). Im verbundenen Zustand bilden die beiden Kragenteile 4.1, 4.2 einen sich nach radial innen erstreckenden, umlaufenden Bundabschnitt 10 aus, an dem ein umlaufender Dichtabschnitt 11 in Form einer Dichtlippe angeordnet ist. Beim Anlegen der beiden Kragenteile 4.1, 4.2 an ein Rohr 5, legt sich der Dichtabschnitt 11 bzw. die Dichtlippe dichtend an das Rohr 5 an.

Wie insbesondere der Figur 2 zu entnehmen ist, weist der Bundabschnitt 10 schlitzartige Öffnungen 12 auf. Diese dienen der Aufnahme von Stecklaschen 13, die stirnseitig an der Brandschutzmanschette 8 ausgebildet sind. Die Stecklaschen 13 können nach dem Einstecken in die Öffnungen 12 leicht umgebogen werden, so dass die Brandschutzmanschette im Kragenelement 4 gehalten ist (siehe Figur 1).

Im verbundenen Zustand bilden die beiden Kragenteile 4.1, 4.2 zudem einen sich nach radial außen erstreckenden, umlaufenden Bundabschnitt 17 aus, der als Schalungshilfe beim Einmörteln des Kragenabschnitts 4 in eine Wand- oder Deckenöffnung 21, 22 einsetzbar ist (siehe Figur 1). Die in den Figuren 1 und 2 dargestellte Vorrichtung 1 ist in eine Deckenöffnung 22 (nicht dargestellt) eingesetzt und mittels eines Mörtels 23 in dieser Deckenöffnung 22 fixiert. Da die Deckenöffnung 22 größer als der Bundabschnitt 17 des Kragenelements 4 ist, muss zum Einmörteln eine zusätzliche Schalung verwendet werden.

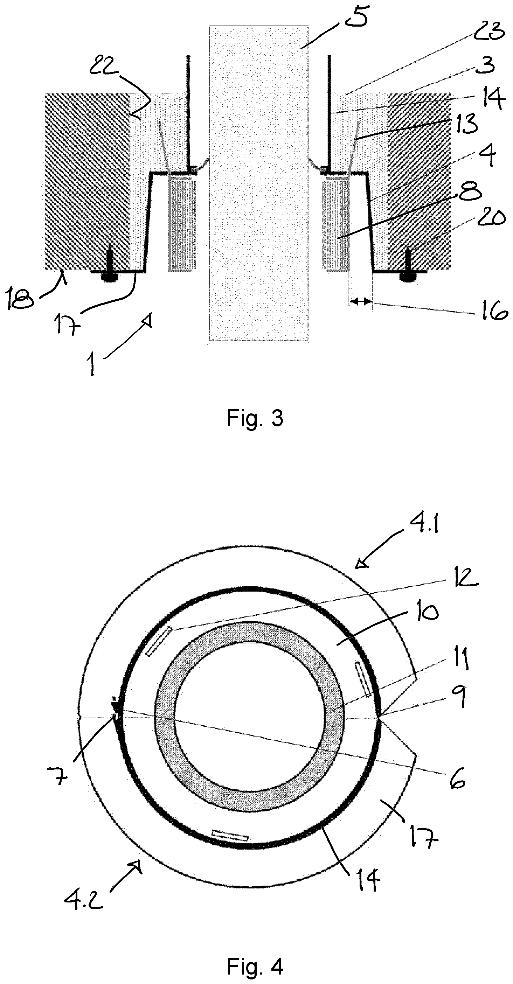

Anstelle zweier separater Kragenteile 4.1, 4.2 können die Kragenteile 4.1, 4.2 auch mittels eines Gelenks oder Scharniers 9 verbunden sein. Eine solche Ausführungsform ist beispielhaft in der Figur 4 dargestellt. Die Kragenteile 4.1, 4.2 müssen dann nach dem Anlegen an das Rohr 5 nur noch an einer Seite über Verschlusselemente 6, 7 verbunden werden.

Die Ausführungsform der Figuren 3 und 4 unterscheidet sich von der der Figuren 1 und 2 zudem dadurch, dass an den Bundabschnitt 10 ein Verlängerungsabschnitt 14 angeordnet ist, der im verbundenen Zustand der beiden Kragenteile 4.1, 4.2 ein Verlängerungsrohr ausbildet. Das Verlängerungsrohr verhindert, dass Mörtel 23 an das Rohr 5 gelangt, so dass lediglich der Dichtabschnitt 11 bzw. die Dichtlippe zu Ausbildung des Dichtabschnitts 11 am Rohr 5 anliegt. Auf diese Weise wird eine optimale Schallentkopplung erreicht. In der Figur 3 ist die Deckenöffnung 22 zudem kleiner als in der Figur 1, so dass der Bundabschnitt 17 als Schalungshilfe beim Einmörteln des Kragenelements 4 dienen kann. Über den Bundabschnitt 17 kann sich das Kragenelement 4 zudem in axialer Richtung an einer Oberfläche 18 der Gebäudedecke 3 abstützen. Eine zusätzliche Fixierung kann mittels Befestigungsmittel 20 in Form von Schrauben bewirkt werden (siehe Figur 3).

Wie den Figuren 1 und 3 zu entnehmen ist, hält die Brandschutzmanschette 8 umlaufend einen radialen Abstand zum Rohr 5 ein. Im Brandfall gelangen so die heißen Brandgase an das intumeszierende Material der Brandschutzmanschette 8, so dass diese frühzeitig aktiviert wird. Aber auch zwischen der Brandschutzmanschette 8 und dem Kragenelement 4 verbleibt ein umlaufender Radialspalt 16. Die Brandschutzmanschette 8 ist somit an drei Seiten den heißen Brandgasen ausgesetzt, wodurch die Aktivierung weiter beschleunigt wird.

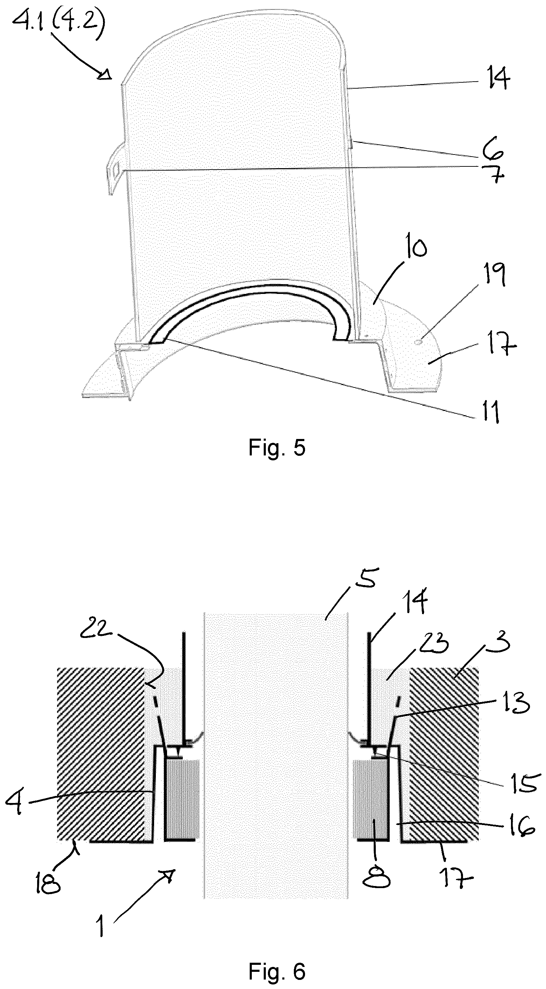

Der Figur 5 ist beispielhaft ein Kragenteil 4.1 bzw. 4.2 mit den Verschlusselementen 6, 7 sowie einem Verlängerungsabschnitt 14 zu entnehmen. Der Bundabschnitt 17 weist zudem Bohrungen 19 auf, die der Aufnahme der Befestigungsmittel 20 dienen (siehe Figur 3).

Die in der Figur 6 dargestellte bevorzugte Ausführungsform einer erfindungsgemäßen Vorrichtung 1 weist eine allseitig von Luft umströmte Brandschutzmanschette 8 auf, da diese über Abstandshalter 15 axial abgestützt ist, die am Bundabschnitt 10 des Kragenelements 4 angeordnet sind. Die Brandschutzmanschette 8 kann so im Brandfall noch schneller aktiviert werden.

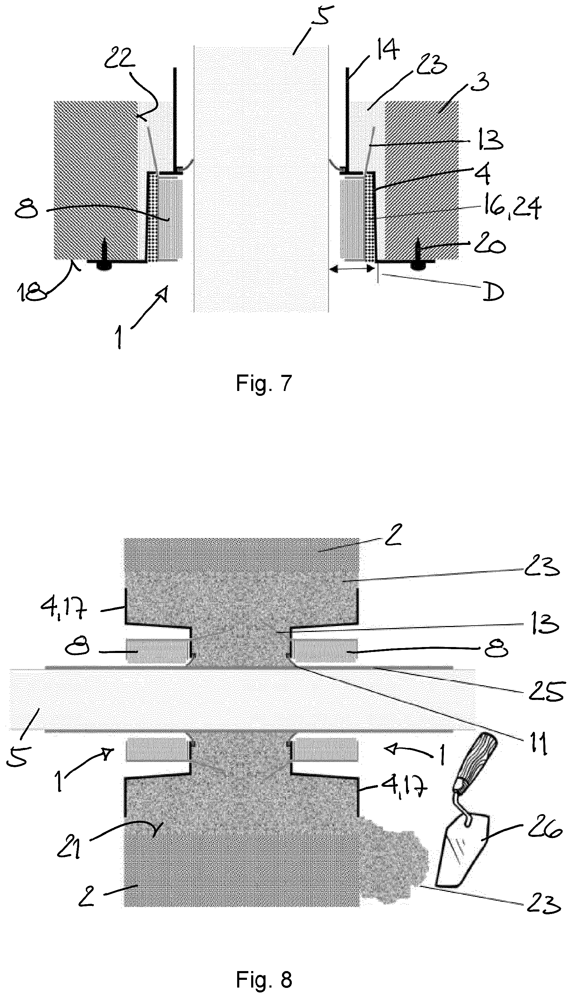

Der Figur 7 ist eine Abwandlung der Ausführungsform der Figur 3 zu entnehmen. Die Anwandlung besteht im Wesentlichen darin, dass im Radialspalt 16 eine Isolierung 24 angeordnet ist. Der Vorteil dieser Ausführungsform ist, dass kleinere Durchmesser D realisierbar sind, da die Isolierung 24 einen direkten Kontakt der Brandschutzmanschette 8 mit dem Kragenelement 4 verhindert.

Die erfindungsgemäße Vorrichtung 1 kann auch zur Herstellung einer rauchgasdichten Rohrdurchführung in einer Gebäudewand 2 eingesetzt werden. Dies ist beispielhaft in der Figur 8 dargestellt. Im dargestellten Fall wird die Rohrdurchführung durch zwei Vorrichtungen 1 realisiert, die von zwei Seiten der Gebäudewand 2 in die Wandöffnung 21 eingesetzt werden. Das Einsetzen der Vorrichtungen 1 erfolgt dabei nach der Installation des Rohrs 5. Zunächst werden die beiden Kragenteile 4.1, 4.2 des Kragenelements 4 der ersten Vorrichtung 1 an das bereits installierte Rohr 5 angelegt und verbunden. Dann wird die Brandschutzmanschette 8 in das Kragenelement 4 eingesetzt bzw. eingesteckt. Von der anderen Seite der Wandöffnung 21 her können die Stecklaschen 13 der Brandschutzmanschette 8 umgebogen werden, so dass die Brandschutzmanschette 8 im Kragenelement 4 fixiert ist. Anschließend kann der Mörtel 23 in die Wandöffnung 21 eingebracht werden. Vor dem Aushärten des Mörtels 23 werden das Kragenelement und die Brandschutzmanschette 8 der zweiten Vorrichtung 1 montiert, wobei überschüssiger Mörtel 23 aus der Wandöffnung 21 verdrängt wird. Dieser kann mit Hilfe einer Kelle 26 abgezogen werden.

### Bezugszeichenliste

- 1: Vorrichtung
- 2: Gebäudewand
- 3: Gebäudedecke
- 4: Kragenelement
- 4.1: Kragenteil
- 4.2: Kragenteil
- 5: Rohr
- 6: Verschlusselement
- 7: Verschlusselement
- 8: Brandschutzmanschette
- 9: Scharnier
- 10: Bundabschnitt
- 11: Dichtabschnitt
- 12: Öffnung
- 13: Stecklasche
- 14: Verlängerungsabschnitt
- 15: Abstandshalter
- 16: Radialspalt
- 17: Bundabschnitt
- 18: Oberfläche
- 19: Bohrung
- 20: Befestigungsmittel
- 21: Wandöffnung
- 22: Deckenöffnung
- 23: Mörtel
- 24: Isolierung
- 25: Schallschutzschlauch
- 26: Kelle

## Patentansprüche

1. Vorrichtung (1) zur Herstellung einer rauchgasdichten und brandabschottenden Rohrdurchführung in einer Gebäudewand oder -decke (2, 3), umfassend
- ein mehrteiliges Kragenelement (4) mit einem ersten Kragenteil (4.1) und einem zweiten Kragenteil (4.2), die um ein Rohr (5) legbar und über integrierte Verschlusselemente (6, 7) verbindbar sind, sowie
- eine Brandschutzmanschette (8), die nach dem Verbinden der beiden Kragenteile (4.1, 4.2) in das Kragenelement (4) einsetzbar, insbesondere einsteckbar, ist.

2. Vorrichtung (1) nach Anspruch 1,
**dadurch gekennzeichnet, dass** die beiden Kragenteile (4.1, 4.2) jeweils eine Halbschale ausbilden und/oder die beiden Kragenteile (4.1, 4.2) über ein Gelenk oder Scharnier (9), vorzugsweise ein Filmscharnier, verbunden sind.

3. Vorrichtung (1) nach Anspruch 1 oder 2,
**dadurch gekennzeichnet, dass** im verbundenen Zustand der beiden Kragenteile (4.1,4.2) das Kragenelement (4) einen sich nach radial innen erstreckenden, umlaufenden Bundabschnitt (10) ausbildet, an dem vorzugsweise ein umlaufender Dichtabschnitt (11), beispielsweise in Form einer Dichtlippe, zur dichtenden Anlage am Rohr (5) angeordnet ist.

4. Vorrichtung (1) nach Anspruch 3,
**dadurch gekennzeichnet, dass** der Bundabschnitt (10) mindestens eine Öffnung (12) zur Aufnahme einer Stecklasche (13) der Brandschutzmanschette (8) aufweist, wobei vorzugsweise die Öffnung (12) durch eine mittels der Stecklasche (13) durchstoßbare Membran verschlossen ist.

5. Vorrichtung (1) nach Anspruch 3 oder 4,
**dadurch gekennzeichnet, dass** das Kragenelement (4) im verbundenen Zustand der beiden Kragenteile (4.1, 4.2) ein Verlängerungsrohr (14) ausbildet, das am sich nach radial innen erstreckenden, umlaufenden Bundabschnitt (10) des Kragenelements (4) angeordnet ist.

6. Vorrichtung (1) nach einem der vorhergehenden Ansprüche,
**dadurch gekennzeichnet, dass** auf dem Bundabschnitt (10) Abstandshalter (15) zur axialen Abstützung der in das Kragenelement (4) eingesetzten, insbesondere eingesteckten, Brandschutzmanschette (8) angeordnet sind.

7. Vorrichtung (1) nach einem der vorhergehenden Ansprüche,
**dadurch gekennzeichnet, dass** bei eingesetzter, insbesondere eingesteckter, Brandschutzmanschette (8) ein umlaufender Radialspalt (16) zwischen dem Kragenelement (4) und der Brandschutzmanschette (8) ausgebildet wird.

8. Vorrichtung (1) nach einem der vorhergehenden Ansprüche,
**dadurch gekennzeichnet, dass** im verbundenen Zustand der beiden Kragenteile (4.1, 4.2) das Kragenelement (4) einen sich nach radial außen erstreckenden, umlaufenden Bundabschnitt (17) zur Abstützung an einer Oberfläche (18) der Gebäudewand oder -decke (2, 3) ausbildet.

9. Vorrichtung (1) nach Anspruch 8,
**dadurch gekennzeichnet, dass** der Bundabschnitt (17) mindestens eine Bohrung (19) zur Aufnahme eines Befestigungsmittels (20), beispielsweise einer Schraube, aufweist.

10. Vorrichtung (1) nach einem der vorhergehenden Ansprüche,
**dadurch gekennzeichnet, dass** die Verschlusselemente (6, 7) der beiden Kragenteile (4.1, 4.2) in einen verriegelnden Eingriff miteinander bringbar sind.

11. Verfahren zur Herstellung einer rauchgasdichten Rohrdurchführung in einer Gebäudewand oder -decke (2, 3) unter Verwendung einer Vorrichtung (1) nach einem der vorhergehenden Ansprüche, umfassend die Schritte:
a) Einsetzen des Rohrs (5) in eine Wand- oder Deckenöffnung (21, 22),
b) Anlegen der beiden Kragenteile (4.1, 4.2) des Kragenelements (4) an das Rohr (5) und Verbinden der beiden Kragenteile (4.1, 4.2),
c) Einsetzen, insbesondere Einstecken, der Brandschutzmanschette (8) in das Kragenelement (4) und
d) Einmörteln des Kragenelements (4) in der Wand- oder Deckenöffnung (21, 22).

12. Verfahren nach Anspruch 11,
**dadurch gekennzeichnet, dass** bei Ausführung von Schritt b) an der Brandschutzmanschette (8) angeordnete Stecklaschen (13) in Öffnungen (12) des Kragenelements (4) eingesteckt werden, wobei vorzugsweise die Stecklaschen (13) nach dem Einstecken in die Öffnungen (12) zur Lagefixierung der Brandschutzmanschette (8) verbogen werden.

13. Verfahren nach Anspruch 11 oder 12,
**dadurch gekennzeichnet, dass** bei Ausführung von Schritt d) das Kragenelement (4) als Schalungshilfe verwendet wird.
